# EUROPEAN PATENT APPLICATION

(11) **EP 1 050 775 A1**
(43) Date of publication of application: **08.11.2000**
(21) Application number: 00303355.2
(22) Date of filing: 20.04.2000
(51) Int. Cl.: G02F 1/1334, G02F 1/29

(54) **Optical phase modulator**

(30) Priority: 22.04.1999 GB 9909323
(71) Applicant: THOMAS SWAN AND CO., LTD., Consett, Co. Durham DH8 7ND (GB)
(72) Inventor: Crossland, William Alden, Harlow, Essex CM20 2QD (GB); Redmond, Maura Michelle, Girton, Cambridge CB3 0NW (GB); Wilkinson, Timothy David, Trumpington, Cambridge CB2 2HZ (GB)
(74) Representative: Mohun, Stephen John

(57) **Abstract**

A phase modulator includes a lower layer of glass or silicon substrate containing a 1-D array of pixels (42) formed from either ITO or aluminium respectively. The substrate is covered by an upper glass plate coated uniformly with ITO to make one large transparent electrode. Polymer-dispersed LC composite material is sandwiched between these layers, the polymer-dispersed material containing a nematic LC (with positive dielectric). Figure 4a shows the bipolar director configuration within the droplets (40) in the field-off condition where the bipolar axis of each droplet is assumed to be randomly oriented. Light impinging on this material may encounter small enough scattering centres to be suitable for Rayleigh scattering. An applied electric field exerts an electric torque on the directors. This is balanced by an elastic torque generated by the distortion of the director pattern away from its equilibrium position. The balance of these two forces determines an equilibrium position of the director and a rotation of the bipolar axis towards an orientation normal to the plane of the SLM. The device is thus able to provide an analogue modulation of the refractive index, and hence phase delay, encountered by incoming light. Figure 4b shows the final switch configuration in which voltages of different magnitudes have been applied to different pixels (42) to produce several different regions (44) of PDLC, with different switch states, and hence a phase pattern suitable to defract light into first order spot with high efficiency.

## Description

The present invention relates to a phase modulator for use in the phase modulation of light, and is concerned particularly with the use of polymer-dispersed liquid crystalline materials to effect such modulation.

Polymer dispersed liquid crystalline materials (PDLCs) are composite materials made of droplets or regions of liquid crystal (LC) encapsulated within a polymer matrix. The liquid crystalline phase type most frequently used is the nematic phase. The most usual electro optic effect employed is the production of a light shutter which transforms between a scattering and non scattering state by the action of an electric field. Such shutters are most commonly developed for applications such as active windows and displays. A key feature in this technology is the use of LC droplet sizes of the order of the wavelength of the incident light (typically droplet diameter (R) = 0.3-3 µm).

Very recently LC particle sizes sufficiently small to be close to the Rayleigh scattering regime (R = 50-100 nm) have been developed and used for the production of non display applications such as holographic gratings and waveguides. In both cases scattering is not desired and the small droplet size greatly reduces any scattering loss. Instead the electro optic effect, upon which the devices are based, depends only on the match or miss-match of the refractive indices in cf. to the polymer matrix (for hologram applications) or on the variation of the apparent birefringence of the system (for waveguide applications).

This invention relates to the use of polymer dispersed liquid crystal materials, containing liquid crystal particles of very small diameter (-100 nm or less), in the development of polarization insensitive analogue phase modulating devices. Currently binary ferroelectric liquid crystal (FLC) phase modulators are being developed for use in free space holographic routing switches for telecomms applications. The great value of FLCs in this application is their fast operation speed and polarisation-independent operation, (since telecomms light signals have no fixed polarisation direction). However they suffer from an upper limit on their maximum potential diffraction efficiency because of the binary nature of the FLC switching effect. The devices described below involve the use of polymer dispersed liquid crystalline materials to generate a polarisation-independent method of producing analogue phase modulation. Many different devices could be based upon this effect but of particular interest is the use of such materials in the production of reconfigurable spatial light modulators for use as holographic light routing switches for telecomms or aerospace applications.

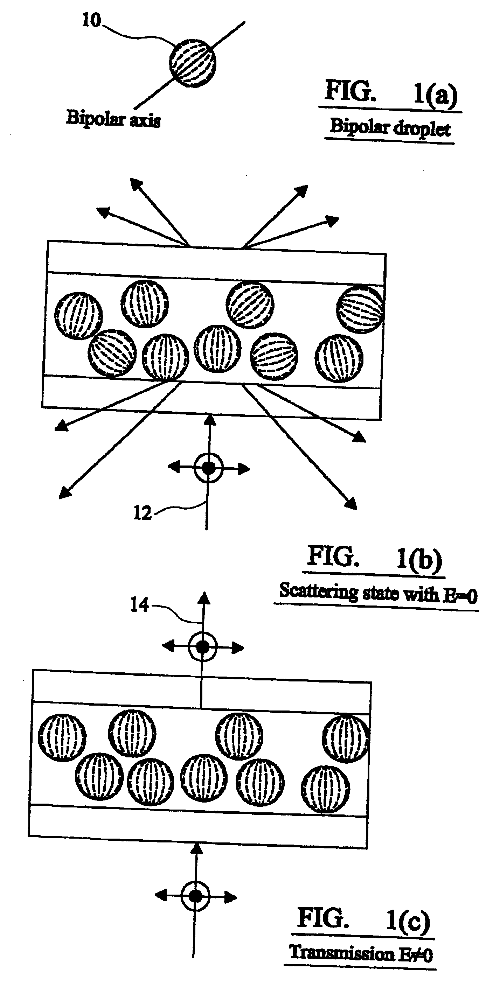

To date PDLC materials have been largely developed with particle diameters of the order of the wavelength of the incident light in order to take advantage of the large scattering such a particle size would produce. Typically such a device is composed of a layer of polymer dispersed liquid crystalline material placed between transparent electrodes such as Indium-Tin Oxide (ITO) on Glass or Polymer). An example of such a device is shown schematically at Figure 1. There are several methods of producing the phase separation necessary to produce PDLC structures. In one example the PDLC material may be filled into a preprepared cell as a prepolymer syrup containing monomer units and photosensitive components intended to make the polymerisation action light activated. The LC material is dissolved within this mixture. Once illuminated with light of the correct wavelength range polymerisation begins. As the polymer chain lengths grow the chemical potential of the LC within the mixture changes resulting in it phase separating from the mixture into droplets. The size of the droplets can be controlled by varying certain parameters of this process such as the rate of polymerisation.

Within each droplet the LC molecules orient themselves with one of the several characteristic LC director (i.e. mean value of direction of molecular long axes) configurations possible. (Which director arrangement is adopted for a given PDLC material is determined by several parameters). Here, we consider the common director configuration known as 'bipolar', for which the directors lie tangentially to the surface of the LC/polymer interface and exhibit two singularities between which there is an axial symmetry of director orientation (a bipolar axis), see Fig 1(a). In the absence of an applied field the bipolar axis orientation is random across the sample such that on average each droplet 10 presents a refractive index different to that of the polymer matrix and thus a refractive index discontinuity to the incoming light. In this state incoming light 12 is scattered strongly effectively blocking its transmission, Fig 1(b). Once a sufficiently high electric field E is applied the bipolar axes become aligned with the field lines. Light travelling through the sample along the direction of the field lines now experiences the droplets' refractive indices as those which lie perpendicular to the bipolar axis direction. Careful formulation of the nematic LC material ensures that the refractive index in this direction matches that of the polymer as closely as possible. The material now appears to be transparent to the transmitted light 14 - see Fig1(c). Thus an electric field is able to change the transmission properties of the material between a scattering state and a non-scattering state.

Devices based on this effect differ greatly from those based upon the present invention in that the latter do not employ PDLCs with particle sizes selected for scattering.

### (b) Non Scattering Devices

### Refractive index match / mis-match for Hologram Generation.

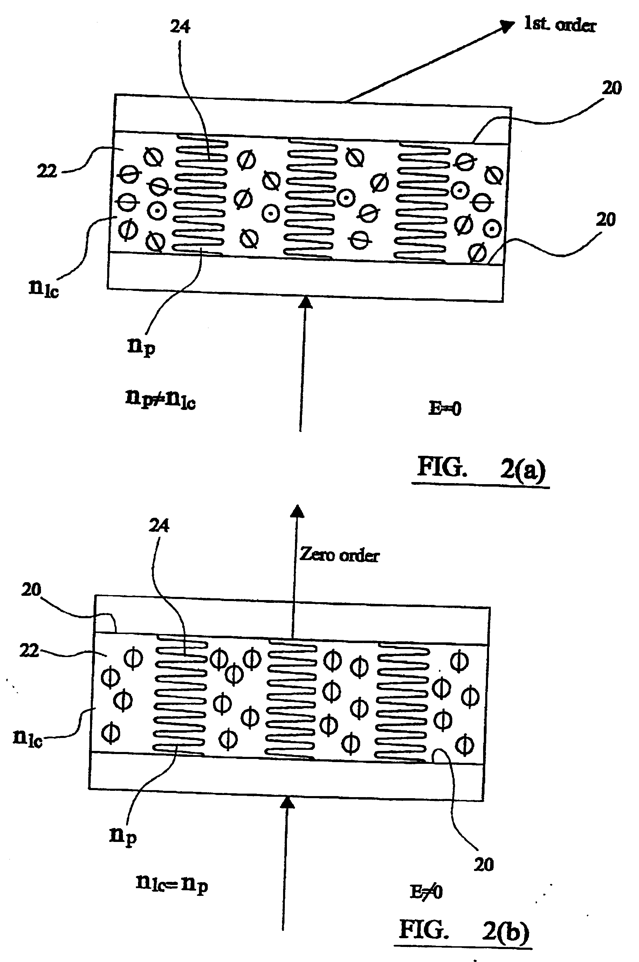

Work has also been undertaken into the application of PDLC materials to fixed hologram generation. Typically the PDLC prepolymer mixture is illuminated by two coherent beams of light which interfere within the PDLC material to produce an interference pattern. The rate of polymerisation of the pre-polymer syrup is dependent on the intensity of the incident light. Polymerisation is faster in areas for which the light is most intense and within these regions the chemical potential of the LC is raised and the potential of the monomer is lowered. This results in the flow of liquid crystal and monomer components in opposite directions resulting in the seperation of polymer and liquid crystals droplets into different areas. Thus for example in a simple diffraction grating lines are formed alternately composed of regions high in concentrations of LC and polymer. The operation of the resulting device now depends on the change in the average refractive index of the LC layers. In the absence of an electric field the average refractive index n(lc)in the high LC density region does not match that n(p) in the low LC density region and the hologram is revealed (see Fig 2a). Some of the light incident normally to the device will be deflected into the first order diffraction peak. When a field E is applied across the electrodes 20 the LC director orientation rotates until the average refractive index of the LC region 22 closely matches that of the polymer 24 effectively 'erasing' the holographic grating. Light incident normally to the device will be transmitted through without deflection (see Fig. 2b). In this way light may be selectively diffracted or transmitted depending on the presence or absence of the electric field. If the particles size is of the order of the wavelength of light the hologram is effectively based on an amplitude grating, i.e. light would pass directly through in the field-on state but would be directed to the first order with some large degree of loss in the field-off state. By utilising LC droplets of very small diameter the hologram is essentially a phase grating and the loss to the deflected beam is much reduced. In addition the use of particles with small diameters allows the spatial frequency of such holograms to be maximised. However this mechanism for hologram generation restricts each device to one fixed spatial frequency and thus one direction of deflection of the diffracted beam. This effect has been proposed as suitable for the generation of variable focus lenses and stacked sets of holograms for holographic routing switches.

The present invention differs from the techniques described above in that it does not use the electric field control of the director profile of the LC particles in order to match or not match the refractive index of permanently recorded PDLC gratings.

### (c) Electrically Controllable Anisotropy for Optical Amplitude Modulators.

Recently is has been suggested to use small particle PDLCs for the development of PDLC waveguide type structures. Here the birefringence of the sample is modulated by director rotation induced by the application of an electric field normal to the direction of incident light. When such a device is placed between crossed polarisers it becomes an amplitude modulator.

The present invention differs from such devices in that it does not involve the generation of separate e and o waves i.e. the technique of the present invention does not involve the use of the birefringence of the LC material to change the polarisation state of the outgoing light by superposition of the emerging e and o rays. No e and o rays are generated within the proposed device since the material is arranged to appear isotropic to the transmitted light.

In contrast to prior techniques described above, specific embodiments of the present invention have as their aim the use of nano-sized polymer-dispersed liquid crystal particles to produce a pure and variable phase delay in the light transmitted by a device. In this context the phase delay is said to be pure in the sense that it is not the result of polarisation modulation due to the separate optical path lengths experienced by e and o rays.

Phase delays produced in this manner are to be used to make efficient analogue - phase, polarisation - independent spatial light modulators.

According to one aspect of the present invention there is provided a light modulator for modulating the phase of incident light in an analogue manner, the modulator comprising an active electro optical layer of polymer dispersed liquid crystalline (PDLC) material sandwiched between two electrode layers, at least one of which is transparent to the incident light, wherein the PDLC material contains liquid crystal droplets located substantially randomly within the active layer and having a length less than the wavelength of the incident light, such that the application of an electric field across the electrodes influences the director configurations of the droplets to modify the average refractive index of the active layer, and therefore modulates the phase of the incident light in an analogue manner.

The modulator may modulate the phase of the incident light in a polarisation-independent manner.

The application of the electric field may distort the director configurations of at least some of the droplets. The extent of distortion may be a function of the applied field.

The light modulator may be arranged to modulate the phase of transmitted incident light. In this case both of the electrode layers may be transparent.

Alternatively or additionally, the light modulator may be arranged to modulate the phase of reflected incident light. In this case one of the electrode layers may be arranged to reflect the incident light which has passed through the active layer.

The or each electrode layer may comprise a substrate of glass or silicon. The transparent electrode layer may comprise a glass or silicon substrate coated in Indium-Tin oxide (ITO) or a silicon substrate (transparent at telecomms wavelength). The reflective electrode may comprise a glass or silicon substrate coated in a reflective, conductive material, such as a metal.

Preferably the liquid crystal material is a nematic material.

A light modulator according to the present invention may form an optical switch such as a spatial light modulator (SLM) for the holographic routing of optical signals used in, for example, telecommunications or aerospace applications.

At least one of the electrode layers may have formed upon it individual electrode elements, which may be addressable individually or collectively and may form a one or two dimensional array. Therefore, different regions of the active layer, which may act as pixels, may be made to experience different strengths of applied electric field.

The invention also includes a method of modulating the phase of light in an analogue manner, the method comprising causing the light to be incident upon a modulator device comprising an active electro optical layer of polymer-dispersed liquid crystalline (PDLC) material sandwiched between electrode layers, at least one of which is transparent to the incident light, wherein the PDLC material contains liquid crystal droplets located substantially randomly within the active layer and having a length less than the wavelength of the incident light, and applying an electric field across the electrodes to influence the director configurations of the droplets so as to modify the average refractive index of the active region, and thereby modulate the phase of the incident light in an analogue manner.

The method may comprise modulating the phase of the incident light in a polarisation-independent manner.

The method may comprise distorting the director configurations of at least some of the droplets. The extent to which the director configurations become distorted may be a function of the applied field.

The method may comprise addressing individually or collectively electrode elements formed on at least one of the electrode layers, so as to apply electrical fields of differing strengths to different regions of the active layer. Thus, distinct regions within the active layer may have their average refractive index modified, and may therefore modulate the phase of the incident light, to different extents.

Embodiments of the present invention will now be described by way of example only with reference to the accompanying diagrammatic drawings in which:
Figures 1a to 1c show schematically a known scattering device incorporating a layer of PDLC material,
Figures 2a and 2b show schematically a known simple diffraction grating device of the prior art,
Figures 3a and 3b show schematically a phase modulator according to an embodiment of the present invention,
Figures 4a and 4b show schematically the device of Figure 3 under the influence of an applied electric field,
Figures 5a and 5b depict schematically an alternative model for the device shown in Figures 3 and 4,
Figures 6a and 6b show schematically another embodiment of the present invention, and
Figures 7a and 7b show, respectively, a transmissive and a reflective holographic optical routing switch such as may incorporate a modulator according to the present invention.

In normal LC devices the microscopic anisotropy is revealed on a macroscopic level by the careful alignment of the material so that incident light is able to experience the full anisotropy of the LC material used. An isotropic arrangement of LC directors of sufficiently small scale would present incident light with an isotropic medium. In PDLC materials the LC is encapsulated within droplets which are small and which, in the case of the bipolar director configuration, may have many different bipolar (average director) orientations. So that on the whole, despite being an inherently anisotropic material, the LC may be presented in an isotropic way to the incident light. Light, incident on devices according to the present invention in the directions shown below, should to a great extent experience the PDLC environment as isotropic in both the switched and unswitched states. The droplet bipolar axis orientation, or director configuration, within the droplet should be modulated, in order to change the value of refractive index that the light experiences as it passes through the material i.e. the LC is presented in a pseudo-isotropic manner but use is still made of its electro optic response to change the average refractive index of this environment.

In the use of large droplet PDLCs the droplet size is large enough to be detected by the light as a region of differing refractive index and thus the source of a large scattering effect. In nano sized particles the LC droplets are smaller than the wavelength of the incident light and so simply modify the refractive index the light experiences as it passes through the PDLC. Scattering is still associated with these particles but now it is much reduced.

Recently, there has been published experimental evidence which would indicate that, due to the factors including small droplet size and prepolymer syrup composition, the polymer dispersed LC addressing fields can be much reduced and the switching speeds increased.

In addition, the small size of the PDLC particles restricts the nematic LCs i.e. smaller droplets prevent large director fluctuations, which are characteristic of the nematic phase in the bulk, from occuring (such fluctuations typically occur on the scale of 1µm). These director fluctuations are responsible for thermally induced optical random scatter in nematic liquid crystals. Also the order of the phase may be increased by the restricted size, thus increasing the potential phase modulation available.

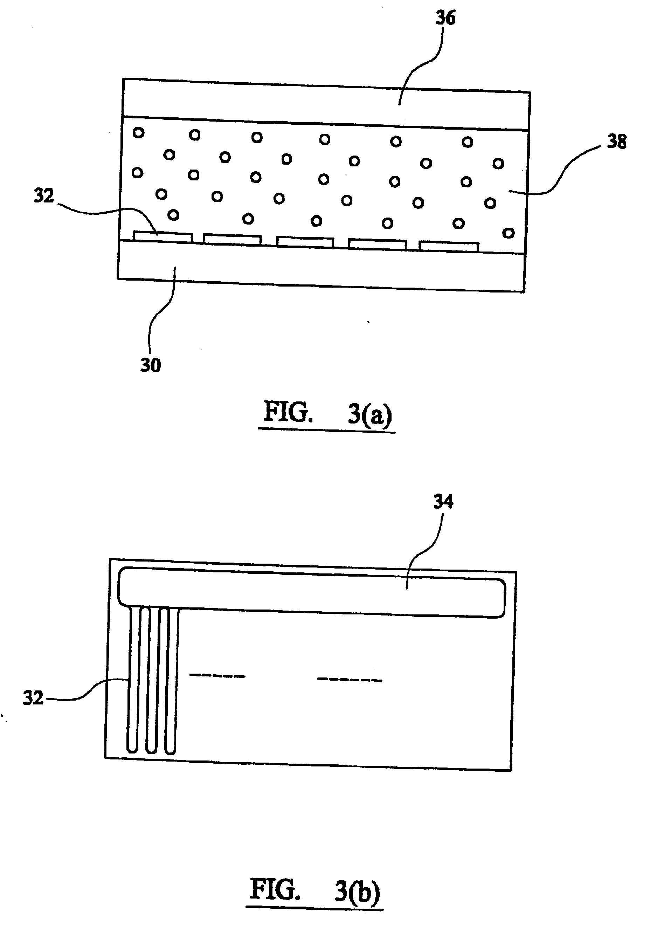

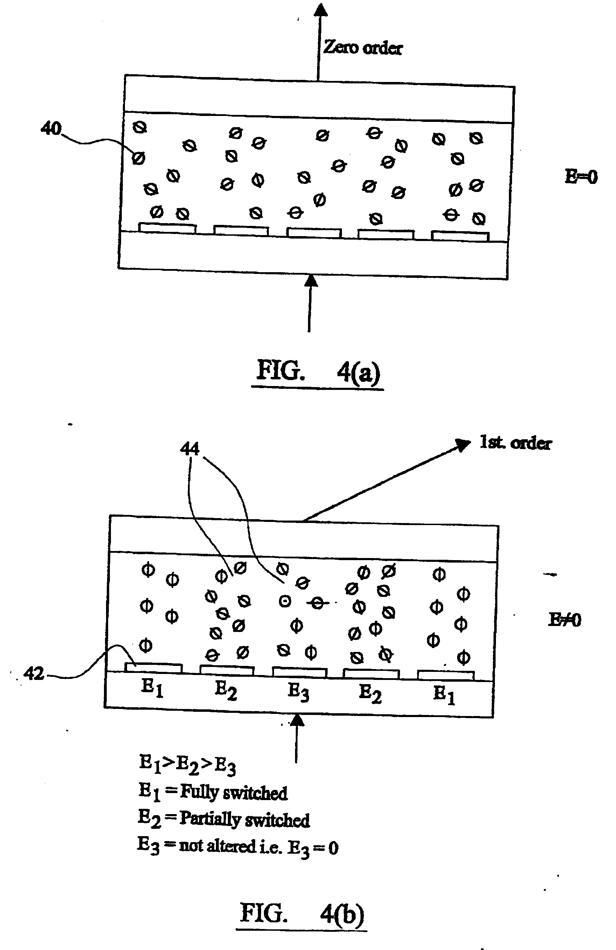

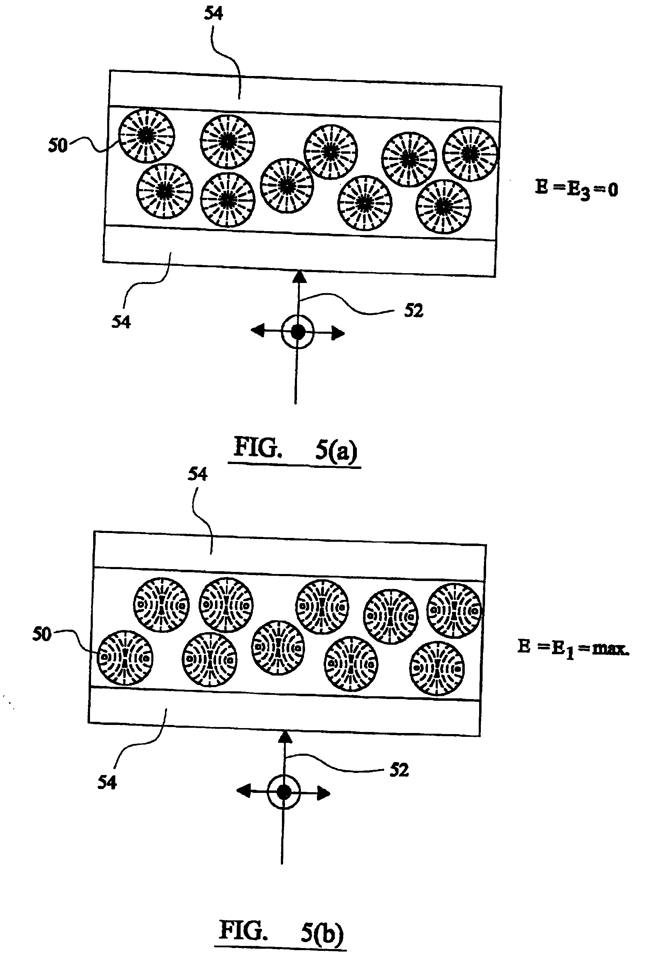

Figures 3 and 4 show schematically an embodiment of phase modulator in accordance with the present invention wherein Figure 3(a) is a side view, and Figure 3(b) a plan view of a modulator device. The lower layer 30 is composed of glass or silicon substrate containing a 1-D array of pixels 32 formed from either ITO or aluminium respectively see Fig 3(b). Since the pixel array is one dimensional there is room for SRAM 34 and high voltage circuitry (not shown). This substrate is covered by an upper glass plate 36 coated uniformly with ITO to make one large transparent electrode. The polymer dispersed LC composite material 38 is sandwiched between them. The polymer dispersed material containing a nematic LC (with positive dielectric) anisotropy may take the forms shown in Fig 4 or Fig 5.

Firstly, considering Fig 4(a), this shows the director configuration within the droplets 40 in the field-off condition. This type of droplet director configuration is known as bipolar. In the absence of an electric field the bipolar axis of each droplet is assumed to be randomly oriented. The direction of this axis is assumed to be determined by a slight elongation of the droplet which results in the bipolar axis along the long axis, and/or the random pinning of the director on the interior surface of the droplet wall. Light impinging on this material may encounter small enough scattering centres (close to 50nm) to be suitable for Rayleigh scattering. The scattering is therefore very low especially at telecomms wavelengths (1550 and 1320nm). Since the bipolar axes are randomly oriented the refractive index encountered by the incoming light is polarisation independent. An applied electric field couples to the LC dielectric anisotropy and exerts an electric torque on the directors. This is balanced by an elastic torque generated by the distortion of the director pattern away from its equilibrium position. The balance of these two forces determines an equilibrium position of the director and a rotation of the bipolar axis towards an orientation normal to the plane of the SLM. The device is thus able to provide analogue modulation of the refractive index, and hence phase-delay, encountered by the incoming light. Fig. 4(b) shows the final switched configuration in which voltages of different magnitudes have been applied to different pixels 42 to produce several different regions 44 of PDLC, with different switched states, and hence a phase pattern suitable to diffract light into first order spot with high efficiency. Dependent factors for the success of this technology may be random orientation of bipolar axes, and a polymer matrix which is insensitive to polarisation direction.

Another model for this device is shown in Figs. 5(a), and (b). Here the droplets 50 contain liquid crystal director configurations resulting from normal orientation of the directors at the LC/polymer interface. The resulting configuration is shown pictorially in Figure 5(a) and is described as being 'radial'. Within one droplet the molecular directors adopt all possible orientations and the device in this state is polarisation insensitive to the incoming light 52. With the application of an electric field E across electrodes 54 the director configuration within the droplet distorts to a new equilibrium value which changes as E increases towards the final 'axial' configuration shown in Fig 5(b). Since light impinging normally at a spatial light modulator interface travels along the axial direction, as shown, the director configuration in all surrounding droplets is identical and the device remains polarisation insensitive. This is also true at intermediate values of E since the director configuration is assumed to distort symmetrically between the radial and final axial configuration as shown. The distortion in director profile as E increases does however have the effect of changing the effective refractive index experienced by the incident light, and thus once again the phase delay encountered by the light passing through this device can be modulated in a polarisation-insensitive way.

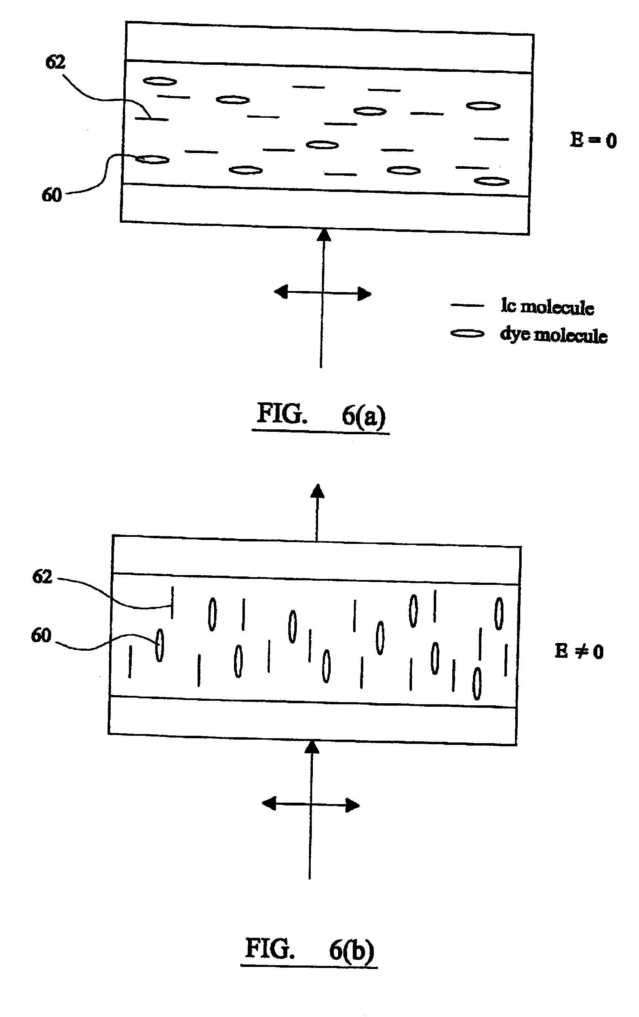

A polarisation insensitive amplitude modulator which could be idealised as being transparent in the field on state and highly absorbing in the field off state can be fabricated by the addition of a dichroic dye component to the above-described structures. Figures 6(a) and (b) show schematically a guest-host structure. The dye would be present as a guest within the LC system and as in typical LC dye guest-host systems would orientate its long axis parallel to that of the LC material. The dye molecule 60 would then follow the motion of the surrounding LC molecules 62 as it is turned in an applied electric field. Dichroic dyes typically exhibit maximum light absorption when the incident light is polarised so that its electric field component lies parallel to the dye/LC molecular long axis as shown schematically in Fig. 6(a). Conversely its minimum absorption occurs when the incident light has it's electric field lying perpendicular to the long axes as shown in Fig. 6(b). Such a device provides a polarisation independent light shutter, which is potentially brighter in the bright state than for example any such device which involves crossed polarisers. It may also be possible to tailor the dye to the wavelength of interest. The main difficulty to overcome is to ensure that the dye and liquid crystal come out of solution as much as possible during the polymerization process.

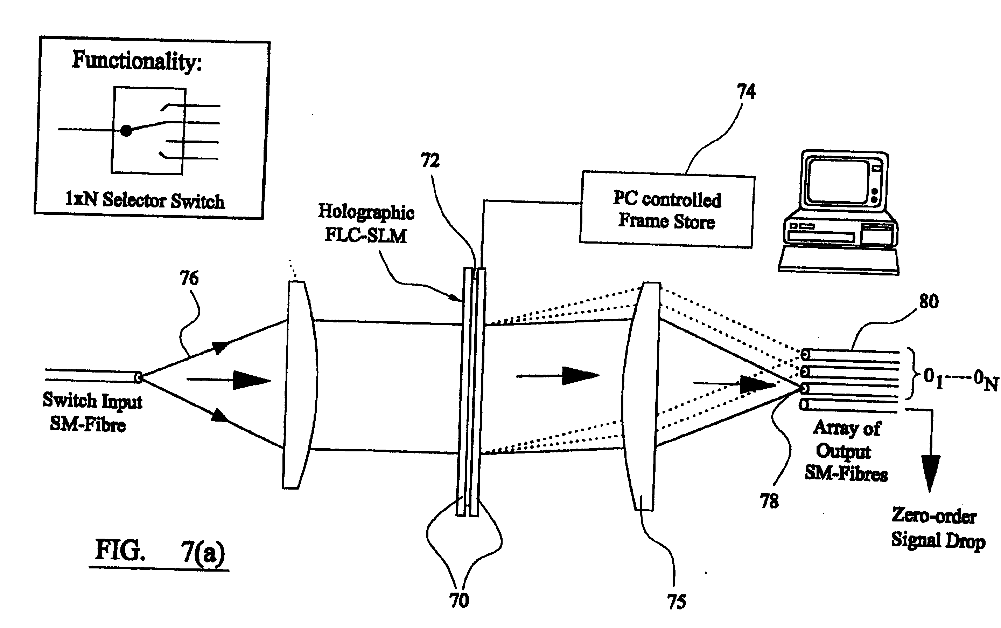

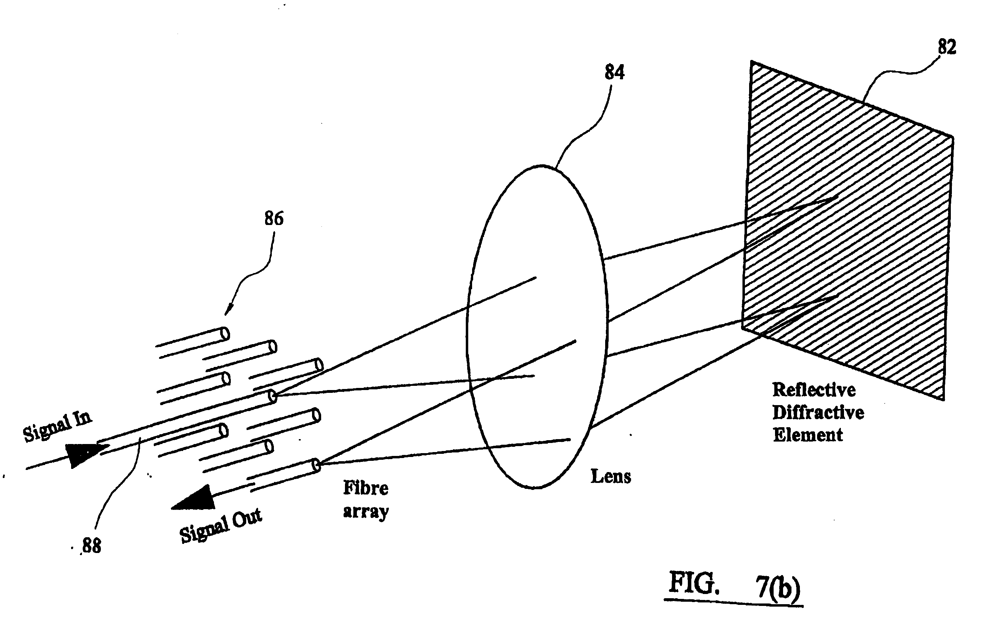

One particular use of devices such as are described above is in spatial light modulators (SLMs), an example of which will now be described with reference to Figures 4 and 7.

Spatial light modulators (SLMs) are devices which modulate the properties of light incident upon them. They may modulate amplitude, phase or polarisation state, and at their core is a material which exhibits an electro optic effect such as a liquid crystalline substance. LC SLMs may consist of a LC enclosed between glass plates coated with ITO (see Figures 4a and 4b). The ITO provides electrodes for addressing the LC whilst being transparent to visible light. Alternatively SLMs may be based on silicon substrates which may operate in reflection or transmission. Such devices used in reflection may use aluminium layers as electrodes for the LC overlaid on them which function also as mirrors for the light reflection. The Al pixels are connected to individual circuitry in the silicon backplane. The advantage of such technology is the density of circuitry which is possible. When used to produce phase holograms FLCs are commonly employed. The advantages of FLCs over other phase modulating LC effects are speed and the fact that the effect is polarisation-insensitive. The helical FLC material, encased within a SLM such that its helix is suppressed, may be switched between two states. The two states represent the effective phase delays of 0 and π. Any holographic image produced by this arrangement is thus limited by the simple binary nature of the display medium. The limitation placed on the applications of such a binary phase medium may be illustrated by consideration of its use in a free space optical routing switch such as might be used in telecomms applications.

One object is to route an input optical signal from one fibre to any of the output fibres by the use of diffraction patterns displayed in the SLM. Light incident on the slm from the input fibre is 'steered' by the SLM to the output fibres. However when such a hologram is generated by a binary phase medium the replay field contains the diffracted spot (plus higher orders) plus it's inherent symmetric orders. This is a problem in two respects. Firstly, it limits the maximum efficiency of light coupling from the input fibre to the output fibre via the first order diffraction peak to no greater than 41% due to light directed to the zero and inverse orders being lost. Secondly, it reduces the area of the replay field that is useful to the device. In comparison the introduction of an extra level of modulation to four or more allows, to a large extent, the removal of the unwanted orders from the replay field, the maximum efficiency of a four-level hologram being 81%. Alternative LC technologies which would provide the multiple phase levels required (such as obtained by the nematic and deformed helix material) suffer greatly from the fact that their operation is not polarisation-insensitive and hence not as suitable for telecomms applications for which the polarisation state of the incoming light is unknown and variable.

Apart from the existence of symmetric orders in the replay field the current FLC technology available for this application is limited in several other ways. Whilst the absolute efficiency of the device has been stated as 41% currently it may be less than this if the FLC parameters are not ideal. For maximum efficiency operation the sample must have a half wave thickness and the required tilt angle of 45 degs. Very few commercially available materials exist which possess such high tilt angles and they suffer from the problems that few exhibit pitch lengths of sufficient length for easy helix suppression, the lack of a smectic A phase leading to difficulties in achieving bistability rather than monostability, and the fact that operation at telecomms wavelengths (1550 and 1320nm) requires thicker samples for half wave operation and hence greater difficulty in obtaining good alignment quality and electric fields of suitable magnitudes using current VLSI technology.

Hence devices based upon alternative LC technologies, which are able to provide both analogue phase modulation from 0 to 2π and polarisation insensitive operation, are advantageous.

Two examples of binary phase spatial light modulators used for beam steering purposes are given in Figures 7(a) and 7(b) below. Figure 7(a) illustrates the use of a transmissive glass SLM for beam steering. It comprises, two glass plates 70 coated with a layer of ITO, a transparent conductor. The ITO layer on one of the two glass plates has been etched in order to define a row of individual pixels. The other plate is not etched and the ITO layer provides a common ground to all of these pixels. The gap formed by the assembly of these plates is filled with a FLC material 72. Each pixel in the resulting SLM is electrically addressed individually and holographic patterns are displayed on the device by computer 74 control of the pixel switched states. Light 76 incident from the input fibre onto the SLM is both transmitted and diffracted through lens 75 into several diffraction orders. The first order diffraction peak 78 is used to couple light into any one of an array 80 of output fibres. By variation of the pattern displayed on the SLM the first order peak is diffracted into different angles so that it is made to be incident on any chosen output fibre. Thus this device allows the "beam steering" and hence routing of optical signals. Figure 7(b) shows the same basic design transformed into a reflective device by the use of a silicon back plane in place of the pixellated glass plate. The incoming signal is now both reflected and diffracted by the reflective SLM 82, through lens 84,and the output fibre array 86 is located next to the input fibre 88. By suitable addressing of the glass SLM, and suitable electronic design of the silicon back plane device, multiple voltage levels may be applied to individual pixels, allowing for the potential development of these designs into multiple rather than binary phase arrays. Telecomms switches can be envisaged, using this technology, which have one input channel switchable to N output channels or N input channels switchable to any of N output channels (where N is a whole number). The use of material which can exhibit analogue phase variations, such as is potentially exhibited by the materials described herein, can result in the development of efficient phase holograms suitable for this application and many others such as optical correlation, WDM filters and projection displays.

## Claims

1. A light modulator for modulating the phase of incident light in an analogue manner, the modulator comprising an active electro optical layer of polymer-dispersed liquid crystalline (PDLC) material sandwiched between two electrode layers, at least one of which is transparent to the incident light, wherein the PDLC material contains liquid crystal droplets located substantially randomly within the active layer and having a length less than the wavelength of the incident light, such that the application of an electric field across the electrodes influences the director configurations of the droplets to modify the average refractive index of the active layer, and therefore modulates the phase of the incident light in an analogue manner.

2. A modulator according to claim 1, wherein the modulator modulates the phase of the incident light, in a polarisation-independent manner.

3. A modulator according to claim 1 or claim 2, wherein the application of the electric field distorts the director configurations of at least some of the droplets.

4. A modulator according to claim 3, wherein the extent of the distortion is a function of the applied field.

5. A modulator according to any of claims 1 to 4, wherein the light modulator is arranged to modulate the phase of transmitted incident light.

6. A modulator according to claim 5, wherein both electrode layers are transparent.

7. A modulator according to any of claims 1 to 5, wherein the modulator is arranged to modulate the phase of reflected incident light.

8. A modulator according to claim 7, wherein one of the electrode layers is arranged to reflect the incident light which has passed through the active layer.

9. A modulator according to any of claims 1 to 8, wherein the or each electrode layer comprises a substrate of glass or silicon.

10. A modulator according to any of claims 1 to 9, wherein the transparent electrode layer comprises a glass substrate coated in Indium-Tin oxide (ITO) or a silicon substrate which is transparent at telecommunications wavelengths.

11. A modulator according to claim 7 or claim 8, wherein the reflective electrode comprises a glass or silicon substrate coated in a reflective, conductive material, such as a metal.

12. A modulator according to any of claims 1 to 11, wherein the liquid crystal material is a nematic material.

13. A modulator according to any of claims 1 to 12, wherein the modulator forms an optical switch such as a spatial light modulator (SLM) for the holographic routing of optical signals.

14. A modulator according to any of claims 1 to 13, wherein at least one of the electrode layers has formed upon it individual electrode elements, which are addressable individually or collectively and which form a one or two dimensional array.

15. A method of modulating the phase of light in an analogue manner, the method comprising causing the light to be incident upon a modulator device comprising an active electro optical layer of polymer-dispersed liquid crystalline (PDLC) material sandwiched between electrode layers, at least one of which is transparent to the incident light, wherein the PDLC material contains liquid crystal droplets located substantially randomly within the active layer and having a length less than the wavelength of the incident light, and applying an electric field across the electrodes to influence the director configurations of the droplets so as to modify the average refractive index of the active region, and thereby modulate the phase of the incident light in an analogue manner.

16. A method according to claim 15 comprising modulating the phase of the incident light in a polarisation-independent manner.

17. A method according to claim 15 or claim 16 comprising distorting the director configurations of at least some of the droplets.

18. A method according to any of claims 15 to 17, wherein the extent to which the director configurations become distorted is a function of the applied field.

19. A method according to any of claims 15 to 18 comprising addressing individually or collectively electrode elements formed on at least one of the electrode layers, so as to apply electrical fields of differing strengths to different regions of the active layer.
